# EUROPÄISCHE PATENTSCHRIFT

(11) **EP 1 136 293 B1**
(45) Veröffentlichungstag und Bekanntmachung des Hinweises auf die Patenterteilung: **24.01.2007**
(21) Anmeldenummer: 01106184.3
(22) Anmeldetag: 13.03.2001
(51) Int. Cl.: B60J 7/047

(54) **Fahrzeugdach mit zwei Deckeln**
Two panels vehicle roof
Toit de véhicule avec deux panneaux

(30) Priorität: 21.03.2000 DE 10013723
(43) Veröffentlichungstag der Anmeldung: 26.09.2001
(73) Patentinhaber: Webasto Vehicle Systems International GmbH, 82131 Stockdorf (DE)
(72) Erfinder: Pfalzgraf, Manfred, 82211 Herrsching (DE)
(74) Vertreter: Wiese, Gerhard

(56) Entgegenhaltungen:
- EP-A- 0 447 781
- FR-A- 2 730 958
- US-A- 4 911 496

## Beschreibung

Die Erfindung betrifft ein Fahrzeugdach mit einer in einer festen Dachhaut ausgebildeten Dachöffnung und zwei hintereinander angeordneten verstellbaren Dekkeln zum Verschließen und teilweisen Freigeben der Dachöffnung, wobei zumindest einer der Deckel in Fahrzeuglängsrichtung in eine Offenstellung verschiebbar und aus seiner Schließstellung in eine Lüfterstellung verschwenkbar ist.

In der EP 0 447 781 A2 ist ein Schiebehebedach mit zwei Deckeln beschrieben, die in einer eine Dachöffnung verschließenden Schließstellung hintereinander angeordnet sind. Der vordere Deckel ist in Schließstellung mit seiner Hinterkante nach oben in eine Lüfterstellung ausstellbar. Beim Ausstellen des vorderen Dekkels in die in die Lüfterstellung wird durch eine Verstelleinrichtung die Vorderkante des hinteren Deckels zwangsweise abgesenkt. In der angehobenen Lüfterstellung des vorderen Deckels kann dieser nach hinten über den hinteren Deckel verlagert werden oder der hintere Deckel kann unter den vorderen Deckel geschoben werden, um den vorderen oder den hinteren Abschnitt der Dachöffnung freizugeben.

Aufgabe der Erfindung ist es, ein eingangs genanntes Fahrzeugdach zu schaffen, das durch unterschiedliche Deckelstellungen eine optimierte Belüftung des Fahrzeugs bereitstellen kann und bei dem während der Bewegung der Deckel in ihre Offenstellungen der Kopfraum der Fondpassagiere möglichst wenig beeinträchtigt ist.

Die Aufgabe wird bei dem eingangs genannten Fahrzeugdach erfindungsgemäß dadurch gelöst, daß wahlweise der vordere Deckel und/oder der hintere Deckel an ihren jeweiligen Deckelvorderkanten um ihre jeweiligen Deckelhinterkanten in ihre Lüfterstellungen absenkbar sind, und daß der hintere Deckel aus seiner geneigten Lüfterstellung unter den geschlossenen vorderen Deckel in eine Offenstellung verschiebbar ist, indem er in seiner geneigten Stellung über den überwiegenden Abschnitt seines Bewegungswegs nach vorne fährt und auf dem letzten Abschnitt des Bewegungswegs mit seiner Deckelhinterkante zum im wesentlichen vollständigen Unterfahren des vorderen Deckels abgesenkt wird. Dadurch ist gewährleistet, daß der hintere Deckel und insbesondere seine Hinterkante bei seiner Bewegung in seiner Offenstellung auf einer Bewegungsbahn geführt ist, die ihn bzw. sie möglichst nahe an der Dachkontur hält, so daß der Kopfraum im Fahrzeugfond im wesentlichen nicht reduziert wird. Für die im Fond sitzenden Insassen bleibt damit ein angenehmes Raumgefühl erhalten.

Bevorzugt ist der hintere Deckel in seiner Offenstellung im wesentlichen parallel zum vorderen Deckel angeordnet, um den erforderlichen Ablageraum gering zu halten.

Die Aufgabe wird bei dem eingangs genannten Fahrzeugdach erfindungsgemäß auch dadurch gelöst, daß wahlweise der vordere Deckel und/oder der hintere Deckel an ihren jeweiligen Deckelvorderkanten um ihre jeweiligen Deckelhinterkanten in ihre Lüfterstellungen absenkbar sind, und daß der vordere Deckel in seiner geneigten Lüfterstellung rückwärts gegen den ebenfalls in seine geneigte Lüfterstellung verschwenkten hinteren Deckel in seine Offenstellung verschiebbar ist, in der er weitgehend über dem hinteren Deckel angeordnet ist. Während bei bekannten Schiebedächern mit zwei Deckeln eine Offenstellung des vorderen Deckels mit im wesentlichen vollständiger Über- oder Unterdeckung des hinteren Deckels nur mit einer Absenkung dieses Deckelpakets auch im hinteren Bereich des hinteren Deckels in den Kopfraum möglich ist, wird bei dem erfindungsgemäßen Fahrzeugdach in jedem Fall ein Absenken der Deckelhinterkante des hinteren Deckels vermieden. Damit bleibt der freie Kopfraum für die Fondinsassen auch beim Öffnen des vorderen Deckels erhalten. Zugleich wird durch die abgesenkte Vorderkante des vorderen Deckels eine Luftströmung während der Fahrt erzeugt, die einem Pulsieren der Luft mit damit einhergehenden Störgeräuschen entgegenwirkt.

Bevorzugt ist der vordere Deckel in seiner Offenstellung im wesentlichen parallel zum hinteren Deckel angeordnet ist, so daß eine kompakte Anordnung der beiden Deckel besteht.

Zweckmäßigerweise sind die beiden Deckel an seitlichen Führungen an einem Dachrahmen der Dachöffnung verschiebbar geführt. Der Dachrahmen kann eingesetzt oder integraler Bestandteil der Dachstruktur sein.

Um den Fahrkomfort für die Fondinsassen nicht zu schmälern, ist es daher zweckmäßig, wenn die Deckelhinterkante des hinteren Deckels durch die seitlichen Führungen über dessen überwiegenden Bewegungsweg in seine Offenstellung im wesentlichen auf Höhe der Dachkontur geführt ist.

Vorzugsweise sind die Deckel transparent und sie sind insbesondere Glasdeckel. Jedoch können auch Blechdeckel oder dergleichen verwendet werden.

Bei transparenten Deckeln oder Glasdeckeln ist es zweckmäßig, wenn das Fahrzeugdach eine Abdeckeinrichtung für die Unterseite der beiden Deckel, insbesondere zumindest ein Rollo, aufweist, um einen Sonnenschutz zu bieten.

Nachfolgend wird ein Ausführungsbeispiel des Fahrzeugdaches unter Bezugnahme auf Zeichnungen näher erläutert. Es zeigt:
- Fig. 1: in einer Draufsicht ein Fahrzeugdach eines Kraftfahrzeugs;
- Fig. 2A bis 2D: in Seitenansichten in schematischer Darstellung ein Fahrzeugdach beim Öffnen des hinteren Deckels; und
- Fig. 3A bis 3C: in Seitenansichten in schematischer Darstellung das Fahrzeugdach beim Öffnen des vorderen Deckels.

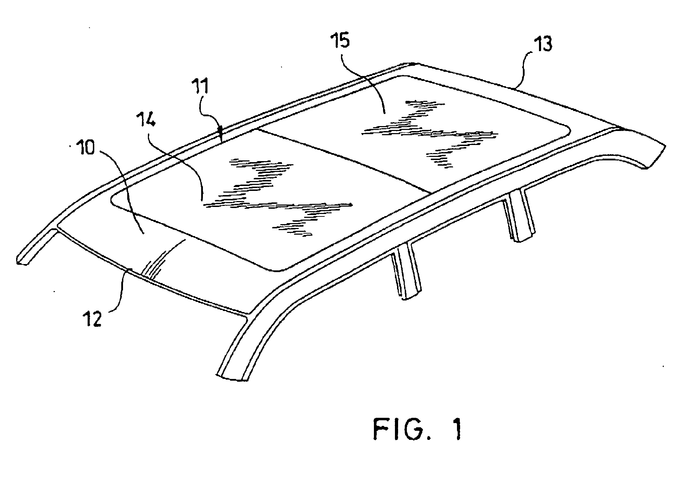

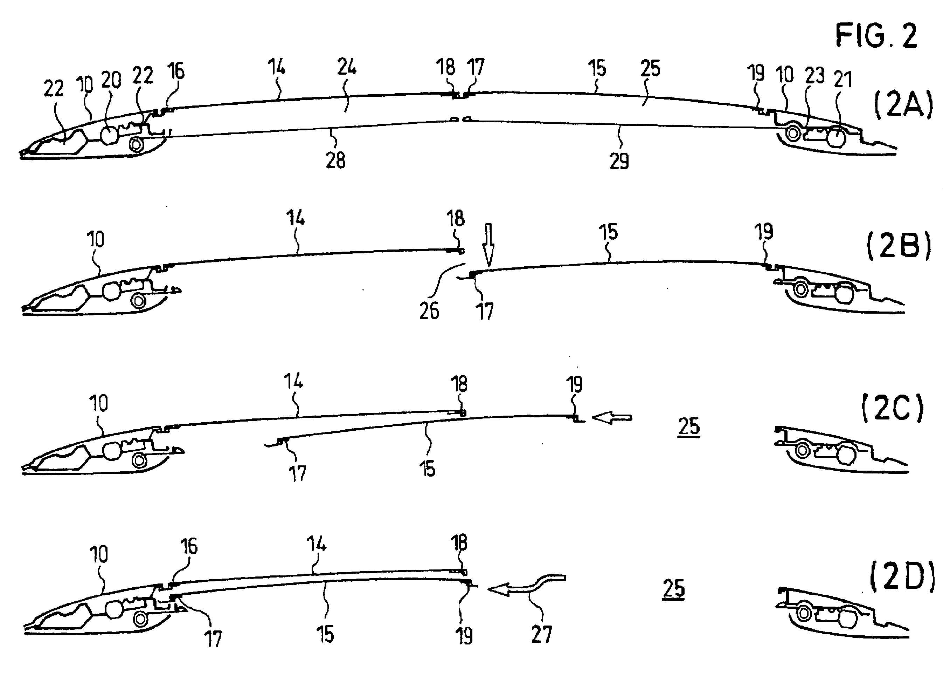

Ein Fahrzeugdach (siehe Fig. 1) weist in einer festen Dachhaut 10 eine Dachöffnung 11 auf, die sich von nahe der Vorderkante 12 der Dachhaut 10 bis nahe an die Hinterkante 13 der Dachhaut 10 erstreckt. An der Unterseite der Dachhaut 10 ist ein Rahmen (nicht dargestellt) befestigt, der beidseits der Dachöffnung 11 Führungsschienen aufweist, in denen ein vorderer Deckel 14 und ein hinterer Deckel 15 verschiebbar gelagert sind. Beide Deckel 14, 15 sind ferner jeweils mit einer Ausschwenkmechanik (nicht dargestellt) versehen, durch die der vordere Deckel 14 und der hintere Deckel 15 an ihren Deckelvorderkanten 16 bzw. 17 bezüglich der jeweiligen Deckelhinterkanten 18 bzw. 19 in Lüfterstellungen absenkbar sind (siehe Fig. 2A bis D). Für ihre Schwenkbewegungen und ihre Verschiebebewegungen entlang der Führungsschienen werden die Deckel 14, 15 von eigenen Antrieben 20 bzw. 21 angetrieben, die an einem vorderen bzw. hinteren Dachrahmenquerteil 22 bzw. 23 angebracht sind und auf bekannte Weise als Elektromotor mit Antriebsritzel und drucksteifen Antriebskabeln ausgebildet sein können. Die Deckel 14, 15 sind vorzugsweise transparent und sind insbesondere Glasdeckel.

In der in Fig. 2A gezeigten Schließstellung des Fahrzeugdaches verschließt der vordere Deckel 14 einen vorderen Abschnitt 24 der Dachöffnung 11 und der hintere Deckel 15 einen hinteren Abschnitt 25.

In Fig. 2B ist eine Deckelstellung gezeigt, in welcher die Deckelvorderkante 17 des hinteren Deckels 15 zu Entlüftungszwecken durch Verschwenken um die in ihrer Position gehaltene Deckelhinterkante 19 abgesenkt ist und eine Lüftungsöffnung 26 zwischen der Deckelhinterkante 18 des vorderen Deckels 14 und der Deckelvorderkante 17 des hinteren Deckels 15 öffnet. Eine derartige Lüfterstellung erzeugt vergleichsweise wenig Luftturbulenzen und somit wenig Störgeräusche.

Um den hinteren Deckel 15 in seine Öffnungsstellung zu bringen, in der er den hinteren Abschnitt 25 der Dachöffnung 11 freigibt, wird er aus seiner schräg gestellten oder geneigten Lüfterstellung (siehe Fig. 2B) unter Beibehaltung dieser Schrägstellung durch den Antrieb 21 nach vorne verschoben (siehe Fig. 2C). Seine Deckelhinterkante 19 wird dabei durch die (nicht dargestellten) seitlichen Deckelführungen auf Höhe und entlang der Dachkontur bewegt, während sich seine Deckelvorderkante 17 mit im wesentlichen gleichbleibendem Abstand zum vorderen Deckel 14 nach vorne bewegt. Wenn sich die Deckelhinterkante 19 des hinteren Deckels 15 auf einen bestimmten Abstand an die Deckelhinterkante 18 des vorderen Deckels 14 angenähert hat, wird sie durch die Deckelführungen in einer Abwärtsbewegung, die beispielsweise stufenförmig gemäß der Darstellung des Pfeiles 27 erfolgen kann (siehe Fig. 2D), abwärts bewegt, so daß sich der hintere Deckel 15 in etwa parallel zu dem vorderen Deckel 14 ausrichtet und in dieser Parallelausrichtung den letzten Abschnitt seines Bewegungs- oder Verschiebeweges in seine volle Öffnungsstellung unter den vorderen Deckel 14 zurücklegen kann. Auf diese Weise ist gewährleistet, daß der hintere Deckel 15 beim Öffnen weitgehend in seiner oberen, der Dachkontur angenäherten Position verbleibt, so daß sein Abstand zu einem im Fond sitzenden Fahrzeuginsassen möglichst groß bleibt und dessen Kopfraum möglichst wenig eingeschränkt wird. Eine Schließbewegung des hinteren Deckels 15 erfolgt in entgegengesetztem Bewegungsablauf.

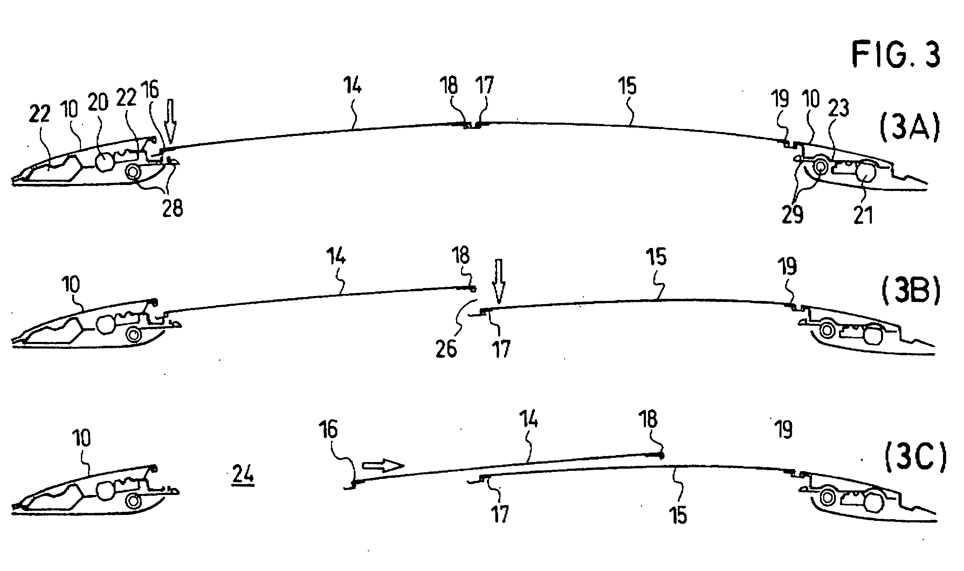

Eine Öffnungsbewegung des vorderen Deckels 14 ist in den Fig. 3 A bis C dargestellt. Der vordere Deckel 14 ist über seinen Ausstellmechanismus an seiner Deckelvorderkante 16 in eine Lüfterstellung abgesenkt (Fig. 3A), während seine Deckelhinterkante 18 an der Deckelvorderkante 17 des hinteren Deckels 15 in ihrer dichten Anordnung verbleibt. Auch der hintere Deckel 15 wird mittels seiner Ausstellmechanik an seiner Deckelvorderkante 17 in seine Lüfterstellung abgesenkt (siehe Fig. 3B) und gibt die Lüfteröffnung 26 frei.

Zum Öffnen oder Freigeben des vorderen Abschnittes 24 der Dachöffnung 11 wird der vordere Deckel 14 in seiner geneigten oder schräg gestellten Lüfterstellung rückwärts über den geneigten hinteren Deckel 15 verschoben, so daß die Deckelhinterkante 18 des vorderen Deckels 14 in etwa auf der Höhe der Dachkontur verschoben wird, während die Deckelvorderkante 16 auf einer im wesentlichen parallel zur Dachkontur verlaufenden und um die Lüftungshöhe nach unten versetzten Bewegungsbahn verschoben wird. Die Überdeckungsanordnung des vorderen Deckels 14 über dem hinteren Deckel 15 ist von der Neigung der beiden Deckel 14, 15 gegen die Dachkontur abhängig. Die Fig. 3C zeigt eine Überdekkungsanordnung, bei der der vordere Deckel 14 etwa zwei Drittel des hinteren Deckels 15 überdeckt.

Die Steuerung der Antriebe 20, 21 der beiden Deckel 14, 15 ist derart ausgebildet, daß die Schwenkbewegungen der Deckel 14, 15 in ihrer Lüfterstellung unabhängig voneinander ausgeführt werden können, daß jedoch ihre Verschiebebewegungen nur in Abhängigkeit der zulässigen Stellung des jeweils anderen Dekkels ausführbar ist. Damit ist eine Kollision der Deckel 14, 15 während der Verschiebung durch die Anordnung der Führungsschienen und durch die Steuerung ausgeschlossen.

Sowohl am vorderen wie auch am hinteren Dachrahmenquerteil oder Querholm 22 bzw. 23 ist ein aufgewickelter und ausziehbarer Himmel oder Rollo 28 und 29 angebracht. Jeder Rollo 28, 29 kann in etwa bis zur Mitte der Dachöffnung 11 ausgezogen werden (siehe Fig. 2A) und deckt damit den zugeordneten Deckel 14 und 15 unterseitig in dem gewünschten Maß ab. Jedoch können auch lamellenartige, verschiebbare Himmel verwendet werden.

### Bezugszeichenliste

- 10: Dachhaut
- 11: Dachöffnung
- 12: Vorderkante
- 13: Hinterkante
- 14: vorderer Deckel
- 15: hinterer Deckel
- 16: Deckelvoderkante
- 17: Deckelvorderkante
- 18: Deckelhinterkante
- 19: Deckelhinterkante
- 20: Antrieb
- 21: Antrieb
- 22: Dachrahmenquerteil
- 23: Dachrahmenquerteil
- 24: vorderer Abschnitt
- 25: hinterer Abschnitt
- 26: Lüfteröffnung
- 27: Pfeil
- 28: Rollo
- 29: Rollo

## Patentansprüche

1. Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) in Fahrzeuglängsrichtung in eine Offenstellung verschiebbar und aus seiner Schließstellung in eine Lüfterstellung verschwenkbar ist,
**dadurch gekennzeichnet,**
**daß** wahlweise der vordere Deckel (14) und/oder der hintere Deckel (15) an ihren jeweiligen Deckelvorderkanten (16 bzw. 17) um ihre jeweiligen Deckelhinterkanten (18 bzw. 19) in ihre Lüfterstellungen absenkbar sind, und
**daß** der hintere Deckel (15) aus seiner geneigten Lüfterstellung unter den geschlossenen vorderen Deckel (14) in eine Offenstellung verschiebbar ist, indem er in seiner geneigten Stellung über den überwiegenden Abschnitt seines Bewegungswegs nach vorne fährt und auf dem letzten Abschnitt des Bewegungswegs mit seiner Deckelhinterkante (19) zum im wesentlichen vollständigen Unterfahren des vorderen Deckels (14) abgesenkt wird.

2. Fahrzeugdach nach Anspruch 1,
**dadurch gekennzeichnet, daß** der hintere Deckel (15) in seiner Offenstellung im wesentlichen parallel zum vorderen Deckel (14) angeordnet ist.

3. Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) in Fahrzeuglängsrichtung in eine Offenstellung verschiebbar und aus seiner Schließstellung in eine Lüfterstellung verschwenkbar ist,
**dadurch gekennzeichnet,**
**daß** wahlweise der vordere Deckel (14) und/oder der hintere Deckel (15) an ihren jeweiligen Deckelvorderkanten (16 bzw. 17) um ihre jeweiligen Deckelhinterkanten (18 bzw. 19) in ihre Lüfterstellungen absenkbar sind, und
**daß** der vordere Deckel (14) in seiner geneigten Lüfterstellung rückwärts gegen den ebenfalls in seine geneigte Lüfterstellung verschwenkten hinteren Deckel (15) in seine Offenstellung verschiebbar ist, in der er weitgehend über dem hinteren Deckel (15) angeordnet ist.

4. Fahrzeugdach nach Anspruch 3,
**dadurch gekennzeichnet, daß** der vordere Deckel (14) in seiner Offenstellung im wesentlichen parallel zum hinteren Deckel (15) angeordnet ist.

5. Fahrzeugdach nach einem der Ansprüche 1 bis 4,
**dadurch gekennzeichnet, daß** die beiden Deckel (14, 15) an seitlichen Führungen an einem Dachrahmen der Dachöffnung (11) verschiebbar geführt sind.

6. Fahrzeugdach nach Anspruch 5,
**dadurch gekennzeichnet, daß** die Deckelhinterkante (19) des hinteren Deckels (15) durch die seitlichen Führungen über dessen überwiegenden Bewegungsweg in seine Offenstellung im wesentlichen auf Höhe der Dachkontur geführt ist.

7. Fahrzeugdach nach einem der Ansprüche 1 bis 6,
**dadurch gekennzeichnet, daß** die Deckel (14, 15) transparent sind und insbesondere Glasdeckel sind.

8. Fahrzeugdach nach einem der Ansprüche 1 bis 7,
**dadurch gekennzeichnet, daß** es eine Abdeckeinrichtung für die Unterseite der beiden Deckel (14, 15), insbesondere zumindest ein Rollo (28, 29), aufweist.

## Claims

1. Vehicle roof having a roof opening (11) formed in a fixed roof skin (10) and two adjustable panels (14, 15) arranged one after the other for the closure and partial exposure of the roof opening (11), it being possible for at least one of the panels (14, 15) to be displaced into an open position in the vehicle longitudinal direction and to be pivoted from its closed position into a ventilation position,
**characterized**
**in that** the front panel (14) and/or the rear panel (15) can optionally be lowered at their respective panel front edges (16 or 17) around their respective panel rear edges (18 or 19) into their ventilation positions, and
**in that** the rear panel (15) can be displaced from its inclined ventilation position under the closed front panel (14) into an open position in that, in its inclined position, it moves forwards over the predominant section of its movement travel and, on the last section of the movement travel, is lowered at its panel rear edge (19) for the purpose of moving substantially completely under the front panel (14).

2. Vehicle roof according to Claim 1, **characterized in that**, in its open position, the rear panel (15) is arranged substantially parallel to the front panel (14).

3. Vehicle roof having a roof opening (11) formed in a fixed roof skin (10) and two adjustable panels (14, 15) arranged one after the other for the closure and partial exposure of the roof opening (11), it being possible for at least one of the panels (14, 15) to be displaced into an open position in the vehicle longitudinal direction and to be pivoted from its closed position into a ventilation position,
**characterized**
**in that** the front panel (14) and/or the rear panel (15) can optionally be lowered at their respective panel front edges (16 or 17) around their respective panel rear edges (18 or 19) into their ventilation positions, and
**in that** the front panel (14), in its inclined ventilation position, can be displaced rearwards against the rear panel (15), likewise pivoted into its inclined ventilation position, into its open position, in which it is arranged largely over the rear panel (15).

4. Vehicle roof according to Claim 3, **characterized in that**, in its open position, the front panel (14) is arranged substantially parallel to the rear panel (15).

5. Vehicle roof according to one of Claims 1 to 4, **characterized in that** the two panels (14, 15) are displaceably guided on lateral guides on a roof frame of the roof opening (11).

6. Vehicle roof according to Claim 5, **characterized in that** the panel rear edge (19) of the rear panel (15) is guided substantially at the height of the roof contour by the lateral guides over its predominant movement travel into its open position.

7. Vehicle roof according to one of Claims 1 to 6, **characterized in that** the panels (14, 15) are transparent and, in particular, are glass panels.

8. Vehicle roof according to one of Claims 1 to 7, **characterized in that** it has a covering device for the underside of the two panels (14, 15), in particular at least a roller blind (28, 29).

## Revendications

1. Toit de véhicule avec une ouverture de toit (11) configurée dans une couverture de toit fixe (10) et avec deux panneaux mobiles (14, 15) disposés l'un à la suite de l'autre et destinés à fermer et dégager partiellement l'ouverture de toit (11), sachant qu'au moins un des panneaux (14, 15) peut être déplacé dans une position ouverte en translation dans la direction longitudinale du véhicule et peut être pivoté de sa position fermée dans une position de ventilation,
**caractérisé en ce que**, au choix, le panneau avant (14) et/ou le panneau arrière (15) peuvent être abaissés dans leur position de ventilation par leur bord avant de panneau respectif (16 ou 17), autour de leur bord arrière de panneau respectif (18 ou 19), et **en ce que** le panneau arrière (15) peut être, à partir de sa position de ventilation inclinée, déplacé en translation dans une position ouverte en dessous du panneau avant fermé (14), par le fait que, dans sa position inclinée, il se déplace vers l'avant sur la majeure partie de sa course de déplacement et que, dans la dernière partie de sa course de déplacement, il est abaissé par son bord arrière de panneau (19) pour passer quasiment totalement sous le panneau avant (14).

2. Toit de véhicule selon la revendication 1, **caractérisé en ce que** le panneau arrière (15) est disposé, dans sa position ouverte, quasiment parallèlement au panneau avant (14).

3. Toit de véhicule avec une ouverture de toit (11) configurée dans une couverture de toit fixe (10) et avec deux panneaux mobiles (14, 15) disposés l'un à la suite de l'autre et destinés à fermer et dégager partiellement l'ouverture de toit (11), sachant qu'au moins un des panneaux (14, 15) peut être déplacé dans une position ouverte en translation dans la direction longitudinale du véhicule et peut être pivoté de sa position fermée dans une position de ventilation,
**caractérisé en ce que**, au choix, le panneau avant (14) et/ou le panneau arrière (15) peuvent être abaissés dans leur position de ventilation par leur bord avant de panneau respectif (16 ou 17), autour de leur bord arrière de panneau respectif (18 ou 19), et **en ce que** le panneau avant (14), dans sa position de ventilation inclinée, peut être déplacé en translation vers l'arrière, en direction du panneau arrière (15) lui aussi pivoté dans sa position de ventilation inclinée, dans sa position ouverte dans laquelle il est disposé pour l'essentiel au-dessus du panneau arrière (15).

4. Toit de véhicule selon la revendication 3, **caractérisé en ce que** le panneau avant (14) est disposé, dans sa position ouverte, quasiment parallèlement au panneau arrière (15).

5. Toit de véhicule selon l'une des revendications 1 à 4, **caractérisé en ce que** les deux panneaux (14, 15) sont guidés en translation sur des guides latéraux sur un cadre de toit de l'ouverture de toit (11).

6. Toit de véhicule selon la revendication 5, **caractérisé en ce que** le bord arrière de panneau (19) du panneau arrière (15) est guidé par les guides latéraux, sur la majeure partie de sa course de déplacement dans sa position ouverte, quasiment à hauteur du contour du toit.

7. Toit de véhicule selon l'une des revendications 1 à 6, **caractérisé en ce que** les panneaux (14, 15) sont transparents et sont notamment des panneaux en verre.

8. Toit de véhicule selon l'une des revendications 1 à 7, **caractérisé en ce qu'**il présente un dispositif de recouvrement pour le dessous des deux panneaux (14, 15), en particulier au moins un store (28, 29).
